# EUROPÄISCHE PATENTANMELDUNG

(11) **EP 1 422 834 A1**
(43) Veröffentlichungstag der Anmeldung: **26.05.2004**
(21) Anmeldenummer: 02360325.1
(22) Anmeldetag: 25.11.2002
(51) Int. Cl.: H04B 3/32

(54) **Telekommunikations-vorrichtung zur Kompensation von Nebensprechen**

(71) Anmelder: ALCATEL, 75008 Paris (FR)
(72) Erfinder: Ashirafi, Bagher, 73240 Wendlingen (DE)
(74) Vertreter: Menzietti, Domenico, Dipl.-Ing

(57) **Zusammenfassung**

Aufgabe der Erfindung ist es, eine Telekommunikations-Vorrichtung zur Kompensation von Nebensprechen zu schaffen, die die Anzahl der benötigten adaptiven Filter minimiert. Durch die Verwendung einer erfindungsgemäßen Schaltvorrichtung (S1, S2) kann die Anzahl der benötigten adaptiven Filter (F1, F2, F3, F4) erheblich reduziert werden. Mittels der Schaltvorrichtung (S1, S2) werden nur solche Signale von Sende-, Empfangs- und/oder Blindleitungen ausgewählt, die einen erheblichen Störeinfluss auf das jeweilige Empfangssignal haben. Für eine Leitungseinrichtung von beispielsweise 32 Sende- und 32 Empfangsleitungen sind beispielsweise nur 4 adaptive Filter für jede zu kompensierende Empfangsleitung vorgesehen. Ein erfindungsgemäßer DSLAM beinhaltet z.B. n DSL-Schaltkreise (DSLI, DSL2, DSLn), n Weichen (W1, W2, Wn), n Kompensationsschaltungen (K1, K2, Kn) mit jeweils k adaptiven Filtern (F1, F2, F3, F4) sowie eine Schaltvorrichtung (S1).

## Beschreibung

Die Erfindung betrifft eine Telekommunikations-Vorrichtung zur Kompensation von Nebensprechen.

In EP 0 480 323 B1 ist eine Leitungseinrichtung zur Kompensation von Nebensprechen offenbart. Referenzsignale, die aus Sende- und/oder Empfangsleitungen entnommen werden, werden über adaptive Filter Empfangsleitungen zugeführt. Durch die negative Addition dieser Referenzsignale zu den Empfangsignalen werden Störungen, die in den Empfangssignalen enthalten sind, kompensiert. Es ist vorgesehen, für jede zu kompensierende Empfangsleitung eine Anzahl von adaptiven Filtern vorzusehen, die mindestens der Anzahl der Sendeleitungen entspricht. Für eine Leitungseinrichtung von beispielsweise 32 Sende- und 32 Empfangsleitungen sind somit mindestens 32 adaptive Filter für jede zu kompensierende Empfangsleitung vorgesehen. Bei 32 Empfangsleitungen sind somit mindestens 32 mal 32 gleich 1024 adaptive Filter notwendig. Adaptive Filter sind teure Bauteile, die die Herstellungskosten einer Leitungseinrichtung erheblich erhöhen.

Aufgabe der Erfindung ist es, eine Telekommunikations-Vorrichtung zur Kompensation von Nebensprechen zu schaffen, die die Anzahl der benötigten adaptiven Filter minimiert.

Gelöst wird diese Aufgabe durch eine Telekommunikations-Vorrichtung gemäß Patentanspruch 1.

Durch die Verwendung einer Schaltvorrichtung kann die Anzahl der benötigten adaptiven Filter erheblich reduziert und die Geräuschunterdrückung bei 4-Draht Leitungen optimiert werden. Mittels der Schaltvorrichtung werden nur solche Signale von Sende-, Empfangsund/oder Blindleitungen ausgewählt, die einen erheblichen Störeinfluss auf das jeweilige Empfangssignal haben. Für eine Leitungseinrichtung von beispielsweise 32 Sende- und 32 Empfangsleitungen sind beispielsweise nur 4 adaptive Filter für jede zu kompensierende Empfangsleitung vorgesehen. Bei 32 Empfangsleitungen sind somit nur 32 mal 4 gleich 128 adaptive Filter notwendig. Dies entspricht einer Einsparung von 896 adaptiven Filtern. Es werden für jede Empfangsleitung die vier größten Störer ermittelt und diese als Kompensationssignale der Empfangsleitung zugeführt. Durch die negative Addition dieser ausgewählten Kompensationssignale zu den Empfangsignalen werden Störungen, die in den Empfangssignalen enthalten sind, erheblich kompensiert. Der Vorteil der geringeren Anzahl von adaptiven Filtern wird erkauft mit dem geringeren Kompensationsgrad, da nun nicht mehr alle Sende-, Empfangsund/oder Blindleitungsstörsignale kompensiert werden können. Doch wird durch die Limitierung auf eine bestimmte Anzahl von adaptiven Filtern, z.B. vier für jede Empfangsleitung, eine ausreichende Kompensation im Bereich von 70 bis 90 % erzielt, da beispielsweise die vier größten Stören prozentual sehr gewichtig sind und die Hinzunahme weiterer Kompensationssignale die Kompensation nur unwesentlich verbessern würde. Mittels der Schaltvorrichtung und den Kompensationsschaltungen wird die Möglichkeit geschaffen in einer Trainingsphase für jede Empfangsleitung individuell zu ermitteln, welche der anderen Leitungen sie negativ beeinflusst. Nach Abschluss der Trainingsphase sind für jede Empfangsleitung die vier größten Störer ermittelt und werden als Kompensationssignale der jeweiligen Empfangsleitung zugeführt. Die Trainingsphase kann in regelmäßigen zeitlichen Abständen wiederholt werden, um die Kompensation zu optimieren. Dies kann auch während des Betriebs erfolgen.

Vorteilhafte Ausgestaltungen der Erfindung sind den abhängigen Ansprüchen sowie der nachfolgenden Beschreibung zu entnehmen.

Im folgenden werden zwei Ausführungsbeispiele der Erfindung unter Zuhilfenahme von fünf Figuren erläutert. Es zeigen:
- Fig. 1: eine schematische Darstellung eines Ausschnitts eines DSL Access Multiplexers beinhaltend eine erfindungsgemäße Telekommunikations-Vorrichtung zur Kompensation von Nebensprechen,
- Fig. 2: eine schematische Darstellung einer Kompensationsschaltung der erfindungsgemäßen Telekommunikations-Vorrichtung aus Fig. 1,
- Fig. 3: eine schematische Darstellung eines Echo-Cancellers der Kompensationsschaltung aus Fig. 2,
- Fig. 4: eine schematische Darstellung einer weiteren Kompensationsschaltung der erfindungsgemäßen Telekommunikations-Vorrichtung aus Fig. 1 und
- Fig. 5: eine schematische Darstellung einer Schaltvorrichtung für die weitere Kompensationsschaltung aus Fig. 4.

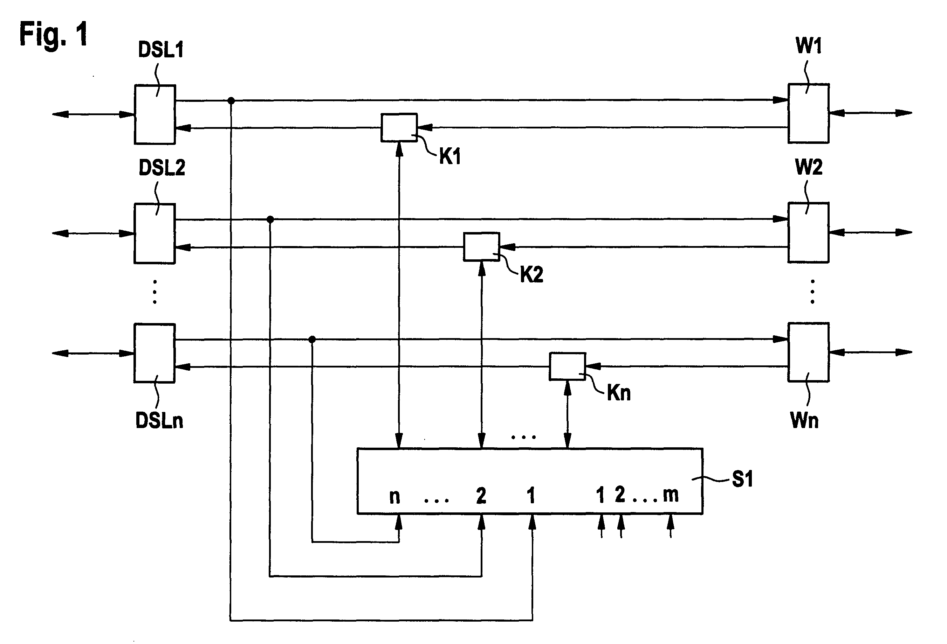

Das erste Ausführungsbeispiel wird nun unter Zuhilfenahme der Figuren 1 bis 3 erläutert.

Fig. 1 zeigt einen Ausschnitts eines DSL Access Multiplexers beinhaltend eine erfindungsgemäße Telekommunikations-Vorrichtung zur Kompensation von Nebensprechen.

DSL Access Multiplexer werden üblicherweise als DSLAM oder ASAM = Advanced Services Access Manager bezeichnet; DSL = Digital Subscriber Line. Sie werden eingesetzt in Zugangsnetzen der Telekommunikation. Teilnehmerseitig ist ein DSLAM mit einer Vielzahl von Teilnehmern verbunden; dies können private Teilnehmer und/oder Geschäftskunden sein. Netzseitig ist ein DSLAM z.B. mit Edge Equipment, einem Edge Router, einem Remote DSLAM, dem ATM, dem SDH, dem SONET, dem Ethernet oder dem Internet verbunden; ATM = Asynchroner Transfer Modus, SDH = Synchrone Digitale Hierarchie, SONET = Synchronous Optical Network. Ein DSLAM ist üblicherweise in einem Central Office angeordnet. Teilnehmerseitig werden über 2-Draht Leitungen verschiedene Dienste zur Verfügung gestellt. Dies können sein: ADSL, HDSL, G.SHDSL, VoDSL, POTS, ISDN, Voice, Data, Video, etc., VoDSL = Voice over DSL, POTS = Public Switched Telephone Network, ISDN = Integrated Digital Services Network. Die 2-Draht Leitungen mehrerer Teilnehmer werden zumeist in einem Bündel verlegt. Durch die örtliche Nähe zueinander können Signale von der einen Leitung auf eine andere übersprechen. Dies führt zu Störungen in der einen Leitung. Allgemein wird dies als Nebensprechen bezeichnet. Darunter werden auch Impulsstörungen, Echos, Übersprechen, Nahnebensprechen und Fernnebensprechen subsumiert. Bevor die Teilnehmersignale im DSLAM gemultiplext und netzseitig weitergeleitet werden ist es vorteilhaft das Nebensprechen weitestgehend zu kompensieren.

Im DSLAM in Fig. 1 sind nur die für das Verständnis der Kompensation des Nebensprechens relevanten Bauteile angegeben. Die weiteren Bauteile eines DSLAM sind dem Fachmann geläufig.

Der DSLAM beinhaltet n DSL-Schaltkreise DSL1, DSL2, DSLn, n Weichen W1, W2, Wn, n Kompensationsschaltungen K1, K2, Kn sowie eine Schaltvorrichtung S1; n ist eine natürliche Zahl, z.B. 32.

Ein DSL-Schaltkreis DSL1, DSL2, DSLn beinhaltet Bauteile wie einen DSL-Modulator, einen DSL-Demodulator, Filter, Entzerrer, Entwürfler, Entscheider, Kodierer, Dekodierer, Protokollumsetzer, etc. Er dient dazu einen Schnittstelle für einen bestimmten DSL-Dienst bereitzustellen und ist üblicherweise als integrierte Schaltung ausgeführt. Die DSL-Schaltkreise DSL1, DSL2, DSLn sind beispielsweise auf einer oder mehreren Line Cards oder einem oder mehreren Boards platziert.

Ein Weiche W1, W2, Wn, auch als Gabelschaltung bezeichnet, dient der Separierung von Sende- und Empfangsleitung. In der Weiche W1, W2, Wn findet eine 2-Draht 4-Draht Umsetzung statt. Von DLSAM zum Teilnehmer werden Signale bidirektional über eine 2-Draht Leitung übertragen. Im DSLAM wird die 2-Draht Leitung in zwei unidirektionale 2-Draht Leitungen aufgeteilt, eine 2-Draht Leitung dient als Sendeleitung und zur Übertragung von Signalen vom DSLAM zu den Teilnehmern, die andere 2-Draht Leitung dient als Empfangsleitung und zum Empfang von Teilnehmersignalen.

DSL-Schaltkreise DSL1, DSL2, DSLn und Weichen W1, W2, Wn sind jeweils über eine 4-Draht Leitung (eine Sendeleitung, eine Empfangsleitung) miteinander verbunden. In jede Empfangsleitung ist eine Kompensationsschaltung K1, K2, Kn eingefügt.

Jede Kompensationsschaltung K1, K2, Kn dient dazu, Nebensprechen in einer Empfangsleitung weitestgehend zu kompensieren. Jede Kompensationsschaltung K1, K2, Kn ist mit der Schaltvorrichtung S1 verbunden.

Die Schaltvorrichtung S1 dient dazu, zusammen mit den Kompensationsschaltungen aus einer Vielzahl von Leitungen für individuelle Empfangsleitungen spezifische Kompensationssignale auszuwählen. Die Schaltvorrichtung hat eine Vielzahl von Eingängen, im Beispiel n + m, und eine Vielzahl von Ausgängen. Die Ausgänge sind mit den Kompensationsschaltungen K1, K2, Kn verbunden, wobei jeweils mehrere Ausgänge mit einer Kompensationsschaltung K1, K2, Kn verbunden sein können, z.B. jeweils vier. Die ersten n Eingänge sind beispielsweise mit den n Sendeleitungen verbunden; n ist eine natürliche Zahl, z.B. 32. Die weiteren m Eingänge sind beispielsweise mit den n Empfangsleitungen und Blindleitungen, d.h. ungenutzten Leitungen verbunden. Die Schaltvorrichtung S1 kann somit aus einem Repertoire von Leitungen schöpfen und aus diesen geeignete Kompensationssignale für die jeweiligen Kompensationsschaltungen K1, K2, Kn auswählen, um eine möglichst effektive Kompensation zu erzielen.

In bisherigen Kompensationsschaltungen erwies es sich stets als Problem nicht zu wissen, welche Leitung welche andere Leitung negativ beeinflusst und folglich Nebensprechen generiert. Dies rührt u.a. von der Verdrillung der Leitungen im Leitungsbündel, das zu den Teilnehmern verlegt ist. Werden nun alle Leitungen pauschal auf jede Leitung zwecks Kompensation rückgekoppelt, so steigt die Anzahl der benötigten adaptiven Filter immens an, was zum einen zu einer Kostenexplosion führt und zum anderen für Zwecke der Kompensation unnötige Rückkopplungen erzeugt, die viel Platz verschwenden. Werden andererseits beispielsweise die Anzahl der Rückkopplungen begrenzt auf alle Sendeleitungen, so werden zum einen eine unter Umständen nicht ausreichende Kompensation erzielt, z.B. nur Nahnebensprechen, und zum anderen für Zwecke der Kompensation unnötige Rückkopplungen erzeugt, die viel Platz verschwenden und die Herstellungskosten erhöhen.

Mittels der Schaltvorrichtung S1 und den Kompensationsschaltungen K1, K2, Kn aus Fig.1 wird nun die Möglichkeit geschaffen in einer Trainingsphase für jede Empfangsleitung individuell zu ermitteln, welche der anderen Leitungen sie negativ beeinflusst. In der Trainingsphase, die z.B. bei der Initialisierung durchgeführt wird und/oder während des Betriebs in regelmäßigen Abständen, wird ein Datenaufkommen künstlich derart erzeugt, dass alle Sende- und alle Empfangsleitungen mit Signalen belegt sind oder es wird der reelle Datentransfer zugrunde gelegt. Zur Ermittlung welche Leitung Nebensprechen in der ersten Empfangsleitung generiert, schaltet Schaltvorrichtung S1 zunächst die erste Sendeleitung zur ersten Kompensationsschaltung K1 durch. Die erste Kompensationsschaltung K1 ermittelt, ob durch die Rückkopplung mit der ersten Sendeleitung eine Verbesserung der Empfangsqualität auf der ersten Empfangsleitung eintritt und teilt ihr Ergebnis der Schaltvorrichtung S1 mit. Danach schaltet die Schaltvorrichtung S1 die zweite Sendeleitung zur ersten Kompensationsschaltung K1 durch. Die erste Kompensationsschaltung K1 ermittelt, ob durch die Rückkopplung mit der zweiten Sendeleitung eine Verbesserung der Empfangsqualität auf der ersten Empfangsleitung eintritt und teilt ihr Ergebnis der Schaltvorrichtung S1 mit. In der Folge werden sukzessive alle Eingänge der Schaltvorrichtung S1 auf die erste Kompensationsschaltung K1 geschaltet und jeweils der Einfluss auf die Empfangsqualität auf der ersten Empfangsleitung ermittelt. Die Schaltvorrichtung S1 speichert alle Ergebnisse und wählt aus den Leitungen am Eingang der Schaltvorrichtung S1 diejenigen aus, die den größten positiven Einfluss auf die Kompensation generiert haben. Somit werden der ersten Kompensationsschaltung K1 nur Signale von denjenigen Leitungen zugeführt, mittels derer wirklich das Nebensprechen reduziert werden kann.

Auf gleiche Art und Weise wird auch für die übrigen n-1 Empfangsleitungen eine Auswahl von Leitungen getroffen, die für Kompensationszwecke verwendet werden.

Die Anzahl der adaptiven Filter je Kompensationsschaltung K1, K2, Kn ist begrenzt. Für jede Kompensationsschaltung K1, K2, Kn ist eine geeignete Anzahl zu wählen. Bei 32 Sendeleitungen und 32 Empfangsleitungen werden z.B. 4 adaptive Filter zum Zwecke der Kompensation des Nebensprechens auf einer Empfangsleitung mittels Signalen von vier ermittelten Störleitungen verwendet. Die Anzahl der adaptiven Filter wird zum einen so gewählt, dass eine ausreichende Kompensation erzielt werden kann und zum anderen die Herstellungskosten für eine Kompensationsschaltung K1, K2, Kn minimiert werden.

Es hat sich gezeigt, dass bei 32 Sendeleitungen und 32 Empfangsleitungen eine ausreichende Kompensation im Bereich von 70-90% erzielt werden kann, wenn die vier stärksten Störer kompensiert werden. Dies bedeutet, dass wenn die vier stärksten Störer identifiziert sind, es ausreichend ist, die entsprechenden Leitungen rückzukoppeln.

In der Trainingsphase wurden für die erste Empfangsleitung beispielsweise die dritte Sendeleitung, die sechszehnte Sendeleitung, die vierte Empfangsleitung und die neuzehnte Empfangsleitung als die stärksten Störer ermittelt. Die Schaltvorrichtung S1 schaltet dann diese Leitungen zur ersten Kompensationsschaltung K1 permanent durch, um während des Betriebs eine optimierte Kompensation des Nebensprechens zu erzielen.

In einer bevorzugten Ausführungsform kann während des Betriebs der Kompensationsgrad der ausgewählten Kompensationssignale stetig oder in regelmäßigen Abständen überwacht werden. Kompensationssignale, die im realen Betrieb keinen oder nur untergeordneten Einfluss auf die Kompensation haben können durch Kompensationssignale anderer Leitungen ausgetauscht werden. Die Überwachung und die Umschaltung auf andere Leitungen wird beispielsweise durch einen in der Schaltvorrichtung S1 integrierten Prozessor und einen Speicher durchgeführt. Der Prozessor ist. z.B. als Mikroprozessor oder als Digitaler Signalprozessor ausgeführt. Im Speicher sind beispielsweise für jede Empfangsleitung alle Eingangsleitungen geordnet nach ihrem Kompensationsgrad für die jeweilige Empfangsleitung gespeichert. Ermittelt der Prozessor im realen Betrieb, dass z.B. die zweite der vier ausgewählten Leitungen keinen oder nur einen untergeordneten Einfluss auf die Kompensation hat, so wird diese Leitung nicht mehr zur entsprechenden Kompensationsschaltung K1, K2, Kn durchgeschaltet. Die im Speicher als fünftbeste Leitung abgespeicherte Leitung wird nun zusätzlich zu der ersten, dritten und vierten ausgewählten Leitung durchgeschaltet. Ermittelt der Prozessor im realen Betrieb, dass die fünftbeste Leitung keinen oder nur einen untergeordneten Einfluss auf die Kompensation hat, so wird diese Leitung nicht mehr zur entsprechenden Kompensationsschaltung K1, K2, Kn durchgeschaltet. Die im Speicher als sechstbeste Leitung abgespeicherte Leitung wird nun zusätzlich durchgeschaltet. Der Prozessor ist somit in der Lage, die Rangfolge der ausgewählten Leitungen während des Betriebs zu ändern und die Kompensation des Nebensprechens zu optimieren. Durch Speicherung der aktuelle Konfiguration und Wiederverwendung bei der nächsten Verbindung ist der Prozessor in der Lage, für jede Empfangsleitung individuell eine optimierte Kompensation des Nebensprechens bereitzustellen und darauf aufbauend gegebenenfalls eine adaptive Optimierung während des Betriebs durchzuführen.

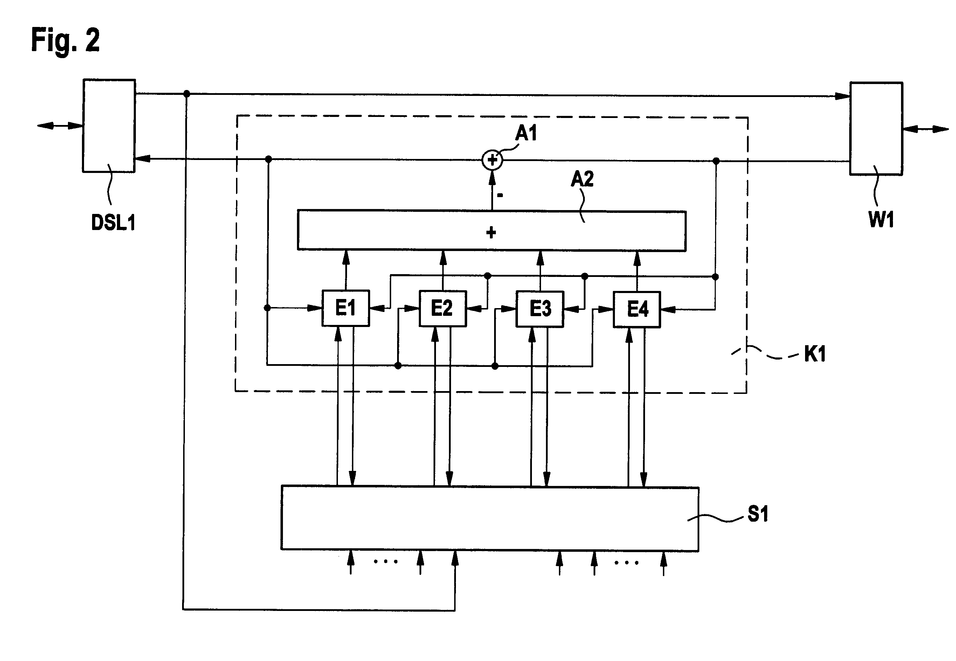

Fig. 2 zeigt eine Kompensationsschaltung der erfindungsgemäßen Telekommunikations-Vorrichtung aus Fig. 1. Im folgenden wird ein detaillierter Aufbau der ersten Kompensationsschaltung K1 aus Fig. 1 beschrieben. Die übrigen n-1 Kompensationsschaltungen K2, Kn entsprechen in ihrem Aufbau und Funktionsweise der ersten Kompensationsschaltung K1.

Kompensationsschaltung K1 ist mit der ersten Weiche W1, dem ersten DSL-Schaltkreis DSL1 und der Schaltvorrichtung S1 verbunden. Sie dient der Kompensation von Nebensprechen in der ersten Empfangsleitung.

Kompensationsschaltung K1 weist vier Echo Canceller E1, E2, E3, E4 und zwei Addierer A1, A2 auf.

Jeder Echo Canceller E1, E2, E3, E4 dient der Bereitstellung eines Kompensationssignals und der Ermittlung des Korrelationsgrads des Kompensationssignals. Die Kompensationssignale der vier Echo Canceller E1, E2, E3, E4 werden im Addierer A2 addiert und mittels des Addierers A1 negativ zu den Empfangssignalen der ersten Empfangsleitung addiert zwecks Kompensation des Nebensprechens. Die Empfangssignale und die negativ addierten Kompensationssignale werden zu den Echo Cancellern E1, E2, E3, E4 rückgekoppelt.

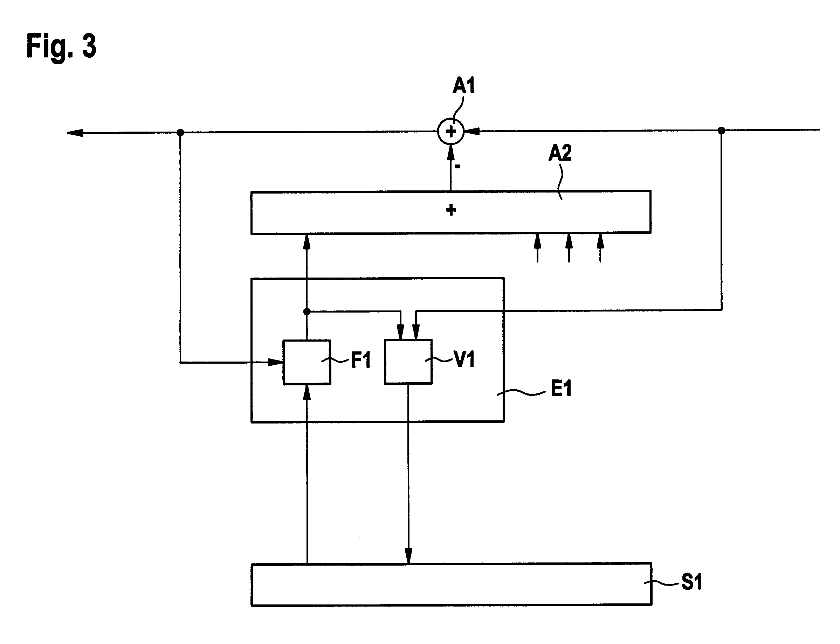

Fig. 3 zeigt einen Echo-Canceller der Kompensationsschaltung aus Fig. 2. Im folgenden wird ein detaillierter Aufbau des ersten Echo Cancellers E1 aus Fig. 2 beschrieben. Die übrigen drei Echo Canceller E2, E3, E4 entsprechen in ihrem Aufbau und Funktionsweise dem ersten Echo Canceller E1.

Echo Canceller E1 ist mit der Schaltvorrichtung S1, dem Addierer A2 sowie der ersten Empfangsleitung vor und nach dem Addierer A1 verbunden. Echo Canceller E1 dient der Bereitstellung eines Kompensationssignals und der Ermittlung des Korrelationsgrads des Kompensationssignals und weist dazu ein adaptives Filter F1 und einen Vergleicher V1 auf.

Das adaptive Filter F1 hat zwei Eingänge und einen Ausgang. Dem einen Eingang wird von der Schaltvorrichtung S1 das Kompensationssignal einer ausgewählten Kompensationsleitung zugeführt. Dem anderen Eingang ist das rückgekoppelte Empfangsignal der ersten Empfangsleitung zugeführt. Die Filterparameter bzw. Filterkoeffizienten werden z.B. durch einen geeigneten Adaptionsalgorithmus ermittelt. Jedes adaptive Filter weist z.B. ca. 50 Koeffizientenblöcke bzw. Gatter auf, so dass je eingespartem Filter eine erhebliche Kostenreduktion erfolgt. Wenn das Kompensationssignal im rückgekoppelten Empfangssignal vorhanden ist korreliert es im adaptiven Filter und steht am Ausgang des adaptiven Filter zur Kompensation zur Verfügung.

Der Vergleicher V1 hat zwei Eingänge und einen Ausgang. Dem einen Eingang ist das Ausgangssignal des adaptiven Filters F1 zugeführt. Dem anderen Eingang ist das Empfangssignal der ersten Empfangsleitung zugeführt. Der Vergleicher V1 ermittelt den Korrelationsgrad eines dem adaptiven Filter F1 zugeführten Kompensationssignals. Der Vergleicher V1 ist im einfachsten fall als Komparator aufgebaut, um zu entscheiden, ob das Kompensationssignal korreliert oder nicht korreliert, also für Kompensationszwecke verwendet werden kann oder nicht. Durch Verwendung eines Bitvergleichers kann der Korrelationsgrad quantifiziert werden, also ermittelt werden, wie gut ein Kompensationssignal korreliert.

Das Ausgangssignal des Vergleichers V1 wird zur Schaltvorrichtung S1 übertragen, die daraufhin die Auswahl eines bestimmten Kompensationssignals als spezifisches, für die Kompensation zu verwendendes oder nicht zu verwendendes durchführt.

Beim ersten Ausführungsbeispiel ist die Telekommunikations-Vorrichtung zur Kompensation von Nebensprechen in einem DSLAM angeordnet. Anstelle in einem DSLAM kann die Telekommunikations-Vorrichtung auch an einer anderen Stelle im Telekommunikationsnetz angeordnet werden. Erforderlich ist nur die Bereitstellung einer 4-Draht Leitung. Dies kann durch zwei Weichen bereitgestellt werden oder an einer Stelle im Telekommunikationsnetz erfolgen, an der eine 4-Draht Leitung vorgesehen ist.

In vorteilhafter Weise können zwischen Weiche W1 und Addierer A1 noch Bauelemente wie ein A/D-Umsetzer und ein Bandpassfilter eingefügt werden.

Die Schaltvorrichtung S1 kann in vorteilhafter Weise eine Schaltmatrix, eine Auswerteeinheit und eine Recheneinheit beinhalten. Alternativ beinhaltet die Schaltvorrichtung S1 eine Vielzahl von Schaltern, die von einem außerhalb der Schaltvorrichtung S1 angeordneten Prozessor angesteuert werden. Der Prozessor hat Zugriff auf einen Speicher, auf dem zumindest die Information über die ausgewählten, spezifischen Kompensationsleitungen gespeichert sind.

In einem DSLAM können ein Prozessor und mehrere Schaltvorrichtungen vorhanden sein. Mittels des einen Prozessors werden dann alle Schaltvorrichtungen gesteuert. Jede Schaltvorrichtung stellt Kompensationssignale für eine Gruppe von Empfangsleitungen bereit. Einer Gruppe gehören beispielsweise 32 Empfangsleitungen an. Für die 32 Empfangsleitungen werden 32 Kompensationsschaltungen benötigt. Jede Kompensationsschaltung beinhaltet vier adaptive Filter zur Bereitstellung von vier Kompensationssignalen. Für die gesamte Gruppe werden lediglich vier mal 32 gleich 128 adaptive Filter benötigt. Eine Schaltvorrichtung stellt somit 128 Kompensationssignale zur Verfügung.

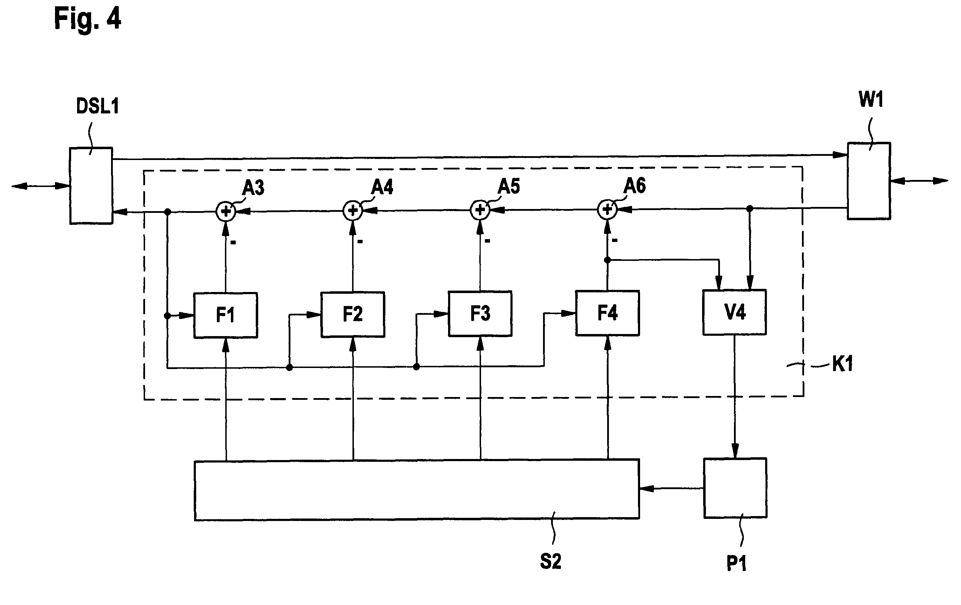

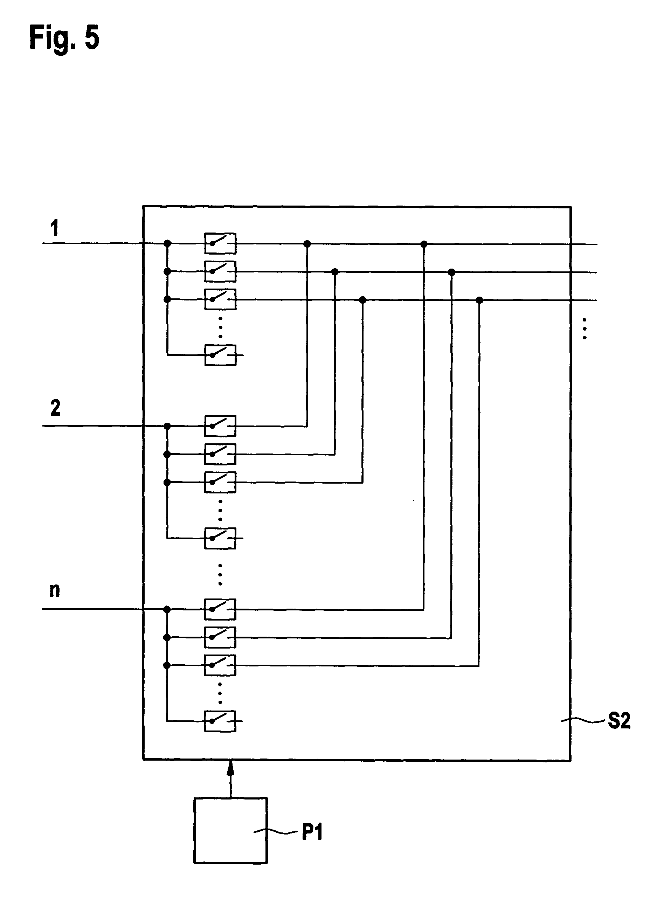

Das zweite Ausführungsbeispiel wird nun unter Zuhilfenahme der Figuren 4 und 5 erläutert.

Fig. 4 zeigt eine Kompensationsschaltung der erfindungsgemäßen Telekommunikations-Vorrichtung aus Fig. 1. Im folgenden wird ein detaillierter Aufbau der ersten Kompensationsschaltung K1 aus Fig. 1 beschrieben. Die übrigen n-1 Kompensationsschaltungen K2, Kn entsprechen in ihrem Aufbau und Funktionsweise der ersten Kompensationsschaltung K1. Die Schaltvorrichtung S1 ist als Schaltvorrichtung S2 plus Prozessor P1 ausgeführt.

Kompensationsschaltung K1 ist mit der ersten Weiche W1, dem ersten DSL-Schaltkreis DSL1 und der Schaltvorrichtung S2 verbunden. Sie dient der Kompensation von Nebensprechen in der ersten Empfangsleitung.

Kompensationsschaltung K1 weist vier adaptive Filter F1, F2, F3, F4, einen Vergleicher V4 und vier Addierer A3, A4, A5, A6 auf.

Jedes adaptive Filter F1, F2, F3, F4 dient der Bereitstellung eines Kompensationssignals. Vergleicher V4 dient der Ermittlung des Korrelationsgrads des Kompensationssignals. Die Kompensationssignale der vier adaptiven Filter F1, F2, F3, F4 werden im zugehörigen Addierer A3, A4, A5, A6 negativ zu den Empfangsignalen der ersten Empfangsleitung addiert zwecks Kompensation des Nebensprechens. Die Empfangssignale und die negativ addierten Kompensationssignale werden zu den adaptiven Filtern F1, F2, F3, F4 rückgekoppelt.

Das adaptive Filter F1 hat zwei Eingänge und einen Ausgang. Dem einen Eingang wird von der Schaltvorrichtung S2 das Kompensationssignal einer ausgewählten Kompensationsleitung zugeführt. Dem anderen Eingang ist das rückgekoppelte Empfangsignal der ersten Empfangsleitung zugeführt. Die Filterparameter werden z.B. durch einen geeigneten Adaptionsalgorithmus ermittelt. Wenn das Kompensationssignal im rückgekoppelten Empfangssignal vorhanden ist korreliert es im adaptiven Filter und steht am Ausgang des adaptiven Filter zur Kompensation zur Verfügung.

Der Vergleicher V4 hat zwei Eingänge und einen Ausgang. Dem einen Eingang ist das Ausgangssignal des adaptiven Filters F4 zugeführt. Dem anderen Eingang ist das Empfangssignal der ersten Empfangsleitung zugeführt. Der Vergleicher V4 ermittelt den Korrelationsgrad eines dem adaptiven Filter F4 zugeführten Kompensationssignals. Der Vergleicher V4 ist im einfachsten fall als Komparator aufgebaut, um zu entscheiden, ob das Kompensationssignal korreliert oder nicht korreliert, also für Kompensationszwecke verwendet werden kann oder nicht. Durch Verwendung eines Bitvergleichers kann der Korrelationsgrad quantifiziert werden, also ermittelt werden, wie gut ein Kompensationssignal korreliert. Das Ausgangssignal des Vergleichers V4 wird zum Prozessor P1 übertragen, der daraufhin über die Schaltvorrichtung S2 die Auswahl eines bestimmten Kompensationssignals als spezifisches, für die Kompensation zu verwendendes oder nicht zu verwendendes durchführt.

Beim zweiten Ausführungsbeispiel wird je Kompensationsschaltung nur ein Vergleicher benötigt. Dies reduziert die Herstellungskosten. Während der Trainingsphase wird jeder Kompensationsschaltung sukzessive ein Kompensationssignal zur Ermittlung des Korrelationsgrads zugeführt. Dazu ist nur ein Vergleicher notwendig. Damit können gegenüber dem ersten Ausführungsbeispiel drei Vergleicher je Kompensationsschaltung eingespart werden, allerdings mit dem Nachteil, dass während des Betriebs nicht gleichzeitig alle vier adaptiven Filter überwacht werden können. Dies kann dadurch teilweise behoben werden, dass während des Betriebs die Kompensationssignale zeitlich rollierend über die vier adaptiven Filter verteilt werden, so dass in gewissen Zeitabschnitten sukzessive alle vier ausgewählten Kompensationssignale am adaptiven Filter F4 anliegen und somit eine Überwachung zumindest zeitweise möglich ist. Das erste Ausführungsbeispiel behält allerdings den Vorteil, dass während der Trainingsphase gleichzeitig vier Kompensationssignale zur Ermittlung des Korrelationsgrads einer Kompensationsschaltung zugeführt werden können und somit die Ermittlung der vier stärksten Störer viermal schneller erfolgen kann als beim zweiten Ausführungsbeispiel. Für die Steuerung des Ablaufs während der Trainingsphase und gegebenenfalls während des Betriebs wird die Schaltvorrichtung S1 bzw. der Prozessor P1 entsprechend programmiert.

Beim zweiten Ausführungsbeispiel werden die Ausgangssignale des Addierers A3 auf alle adaptiven Filter F1, F2, F3, F4 zurückgekoppelt. Alternativ können die Ausgangsignale des Addierers A3 auf adaptives Filter F1, die Ausgangsignale des Addierers A4 auf adaptives Filter F2, Ausgangsignale des Addierers A5 auf adaptives Filter F3 und Ausgangsignale des Addierers A6 auf adaptives Filter F4 rückgekoppelt werden.

Fig. 5 zeigt eine Schaltvorrichtung für die weitere Kompensationsschaltung aus Fig. 4.

Die Schaltvorrichtung S2 beinhaltet beispielsweise n Eingänge und k mal n Ausgänge; n ist die Anzahl der Sendeleitungen, k ist die Anzahl der adaptiven Filter je Kompensationsschaltung. n ist beispielsweise 32 und k 4. In der Schaltvorrichtung sind für jede der n Eingänge 128 Schalter vorgesehen. Die Anzahl der Schalter ergibt sich aus der Anzahl der Ausgänge der Schaltvorrichtung S2, die 32 mal 4 gleich 128 beträgt. Jeder Schalter ist auf der einen Seite mit jedem Ausgang verbunden und auf der anderen Seite mit einem Eingang. Dadurch ergibt sich die Möglichkeit, jeden Eingang auf jeden Ausgang schalten zu können. Angesteuert werden die Schalter durch den Prozessor P1.

Während der Trainingsphase wird z.B. der vierte Schalter der ersten Gruppe geschlossen, um den ersten Eingang mit dem vierten Ausgang zu verbinden und das Signal der ersten Sendeleitung dem vierten adaptiven Filter der ersten Kompensationsschaltung zuzuführen und zu ermitteln, ob das Signal der ersten Signalleitung einen negativen Einfluss auf die Empfangssignale der ersten Empfangsleitung hat. Einer Sendeleitung ist dabei jeweils eine Gruppe von Schaltern zugeordnet, z.B. der ersten Sendeleitung die erste Gruppe von Schaltern, der zweiten Sendeleitung die zweite Gruppe von Schaltern, usw. Gleichzeitig kann der achte Schalter der zweiten Gruppe geschlossen werden, um den zweiten Eingang mit dem achten Ausgang zu verbinden und das Signal der zweiten Sendeleitung dem vierten adaptiven Filter der zweiten Kompensationsschaltung zuzuführen und zu ermitteln, ob das Signal der zweiten Signalleitung einen negativen Einfluss auf die Empfangssignale der zweiten Empfangsleitung hat. Gleichzeitig kann der zwölfte Schalter der dritten Gruppe geschlossen werden, um den dritten Eingang mit dem zwölften Ausgang zu verbinden und das Signal der dritten Sendeleitung dem vierten adaptiven Filter der dritten Kompensationsschaltung zuzuführen und zu ermitteln, ob das Signal der dritten Signalleitung einen negativen Einfluss auf die Empfangssignale der dritten Empfangsleitung hat, usw.
In einem zweiten Schritt wird z.B. der achte Schalter der ersten Gruppe geschlossen, um den ersten Eingang mit dem achten Ausgang zu verbinden und das Signal der ersten Sendeleitung dem vierten adaptiven Filter der zweiten Kompensationsschaltung zuzuführen und zu ermitteln, ob das Signal der ersten Signalleitung einen negativen Einfluss auf die Empfangssignale der zweiten Empfangsleitung hat, usw. Sukzessive wird so ermittelt, welche Sendesignale welche negativen Einflüsse auf welche Empfangssignale haben. Nach Abschluss der Ermittlung werden diejenigen Sendesignale als Kompensationssignale ausgewählt und spezifiziert, die jeweils die größten Störeinflüsse haben. Die ausgewählten, spezifischen Signale werden den Kompensationsschaltungen dann durch Schließen der entsprechenden Schalter zugeführt. Wurden für die erste Empfangsleitung beispielsweise die Sendesignale der ersten, vierten, zehnten und vierzehnten Sendeleitungen als größte Störer ermittelt, so werden z.B. der erste Schalter der ersten Gruppe, der zweite Schalter der vierten Gruppe, der dritte Schalter der zehnten Gruppe und der vierte Schalter der vierzehnten Gruppe geschlossen.

Die Implementierung der Schaltvorrichtung S2 ist beispielhaft und kann durch jede andere Implementierung ersetzt werden, die die Funktion erfüllt, jeden Eingang auf jede Kompensationsschaltung schalten zu können. Anstelle von separaten Leitungen kann auch eine Implementierung mittels eines oder mehrerer Busse verwendet werden.

Beide Ausführungsbeispiele können miteinander kombiniert werden. Beispielsweise können in einer Kompensationsschaltung vier adaptive Filter und zwei Vergleicher verwendet werden. Es ist auch möglich in einer Kompensationsschaltung vier adaptive Filter und einen Vergleicher zu verwenden, wobei der Vergleicher über vier Schalter mit den vier adaptiven Filtern verbunden ist zwecks Zuschaltung bei Bedarf. Beim ersten Ausführungsbeispiel können wie beim zweiten Ausführungsbeispiel vier Addierer verwendet werden statt zwei, usw.

In beiden Ausführungsbeispielen sind die Angaben von Zahlen beispielhaft. Anstelle von 32 Empfangsleitungen können mittels einer Schaltvorrichtung beispielsweise auch nur 16, 24 oder gar 64 Empfangsleitungen kompensiert werden. Bei 32 zu kompensierenden Empfangsleitungen können in jeder Kompensationsschaltung statt vier z.B. auch 2, 6 oder 8 adaptive Filter vorgesehen sein. Bei 16 zu kompensierenden Empfangsleitungen können in jeder Kompensationsschaltung z.B. 2, 4 oder 6 adaptive Filter vorgesehen sein.

Beide Schaltvorrichtungen S1 und S2 haben jeweils eine Anzahl von Eingängen und eine Anzahl von Ausgängen. Die Anzahl der Eingänge kann n + m betragen, wobei n der Anzahl der Sendeleitungen einer Gruppe von Sendeleitungen entspricht, die in einem Bündel von Leitungen übertragen werden. n kann beispielsweise die Werte 16, 24, 32, 64 annehmen. m entspricht beispielsweise der Anzahl von Empfangsleitungen, die einer Gruppe von Empfangsleitungen zugehören, die in einem Bündel von Leitungen übertragen werden. In einem Bündel von Leitungen sind zumeist auch Blindleitungen vorhanden, die zum teil als Reserveleitungen dienen und nicht für den Datenverkehr genutzt werden und somit als Blindleitungen fungieren. m kann auch der Anzahl der Empfangs- und Blindleitungen entsprechen. Die Anzahl der Eingänge einer Schaltvorrichtung kann abhängig vom Anwendungsfall auf n oder m beschränkt sein. Soll nur Nahnebensprechen kompensiert werden, so ist m=0 zu wählen; soll nur Fernnebensprechen kompensiert werden, so ist n=0 zu wählen. Die Anzahl der Ausgänge einer Schaltvorrichtung ist abhängig von der Anzahl der adaptiven Filter einer Kompensationsschaltung und der Anzahl der zu kompensierenden Empfangsleitungen. Wird die Anzahl der adaptiven Filter einer Kompensationsschaltung mit k und der Anzahl der zu kompensierenden Empfangsleitungen mit n bezeichnet, so sind im Fall k=4 und n=32 k mal n gleich 128 Ausgänge je Schaltvorrichtung vorgesehen. Im Fall k=4 und n= 16 sind k mal n gleich 64 Ausgänge je Schaltvorrichtung vorgesehen.

## Patentansprüche

1. Telekommunikations-Vorrichtung zur Kompensation von Nebensprechen, beinhaltend mindestens zwei Kompensationsschaltungen (K1, K2, Kn) für mindestens zwei Empfangsleitungen, **dadurch gekennzeichnet, dass** eine Schaltvorrichtung (S1, S2) vorgesehen ist, die derart ausgestaltet ist, zusammen mit den Kompensationsschaltungen (K1, K2, Kn) aus einer Vielzahl von Leitungen für individuelle Empfangsleitungen spezifische Kompensationssignale auszuwählen.

2. Telekommunikations-Vorrichtung gemäß Patentanspruch 1, **dadurch gekennzeichnet, dass** jede Kompensationsschaltung (K1, K2, Kn) mindestens zwei adaptive Filter (F1, F2, F3, F4) zur Korrelation der Empfangssignale mit spezifischen Kompensationssignalen beinhaltet.

3. Telekommunikations-Vorrichtung gemäß Patentanspruch 2, **dadurch gekennzeichnet, dass** jede Kompensationsschaltung (K1, K2, Kn) mindestens einen Vergleicher (V1, V4) zum Vergleichen der Empfangssignale mit den Ausgangssignalen mindestens einen adaptiven Filters (F1, F4) beinhaltet.

4. Telekommunikations-Vorrichtung gemäß Patentanspruch 2, **dadurch gekennzeichnet, dass** das Produkt der Anzahl der Empfangsleitungen multipliziert mit der Anzahl der adaptiven Filter (F1, F2, F3, F4) mindestens um den Faktor vier kleiner ist als das Produkt der Anzahl der Empfangsleitungen multipliziert mit der Anzahl der Empfangsleitungen.

5. Telekommunikations-Vorrichtung gemäß Patentanspruch 2, **dadurch gekennzeichnet, dass** jeder Empfangsleitung eine Kompensationsschaltung (K1, K2, Kn) zugehörig ist, dass für jede Empfangsleitung Addiermittel (A1, A2, A3, A4, A5, A6) zur Addition der Ausgangssignale der adaptiven Filter (F1, F2, F3, F4) der zugehörigen Kompensationsschaltung (K1, K2, Kn) und zur negativen Addition der addierten Ausgangssignale mit den Empfangssignalen der Empfangsleitung vorgesehen sind.

6. Telekommunikations-Vorrichtung gemäß Patentanspruch 3, **dadurch gekennzeichnet, dass** die Schaltvorrichtung (S2) eine Vielzahl von Schaltern aufweist und ein Prozessor (P1) zur Auswertung der Ausgangssignale der Vergleicher (V1, V4) und zur Ansteuerung der Schalter vorgesehen ist.

7. Telekommunikations-Vorrichtung gemäß Patentanspruch 2, **dadurch gekennzeichnet, dass** die Schaltvorrichtung (S1, S2) mindestens n Eingänge zum Verbinden mit n Sendeleitungen und mindestens k mal n Ausgangsleitungen zum Verbinden mit den adaptiven Filtern (F1, F2, F3, F4) der Kompensationsschaltungen (K1, K2, Kn) aufweist, wobei n und k natürliche Zahlen sind und wobei k kleiner n gilt.

8. Telekommunikations-Vorrichtung gemäß Patentanspruch 1, **dadurch gekennzeichnet, dass** die Kompensationssignale Signale von Sende-, Empfangs- und/oder Blindleitungen sind.

9. DSL Access Multiplexer beinhaltend mindestens zwei Weichen (W1, W2, Wn) und mindestens zwei DSL-Schaltkreise (DSL1, DSL2, DSLn), wobei die Weichen (W1, W2, Wn) derart ausgestaltet sind, jeweils eine 2-Draht-4-Draht-Umsetzung zwecks Separierung von Sende- und Empfangsleitungen durchzuführen, **dadurch gekennzeichnet, dass** mindestens zwei Kompensationsschaltungen (K1, K2, Kn) für mindestens zwei Empfangsleitungen sowie eine Schaltvorrichtung (S1, S2) vorgesehen sind, wobei die Schaltvorrichtung (S1, S2) derart ausgestaltet ist, zusammen mit den Kompensationsschaltungen (K1, K2, Kn) aus einer Vielzahl von Leitungen für individuelle Empfangsleitungen spezifische Kompensationssignale auszuwählen.

10. Verfahren zum Kompensieren von Nebensprechen, **dadurch gekennzeichnet, dass** für zu kompensierende Empfangssignale einer Empfangsleitung über eine Schaltvorrichtung (S1, S2) verschiedene Kompensationssignale einer Kompensationsschaltung (K1, K2, Kn) zugeführt werden und eine Auswahl von spezifischen Kompensationssignalen durchgeführt wird in Abhängigkeit vom Korrelationsgrad der Kompensationssignale mit den Empfangssignalen.

11. Verfahren gemäß Patentanspruch 10, **dadurch gekennzeichnet, dass** in der Kompensationsschaltung mittels mindestens zweier adaptiver Filter (F1, F2, F3, F4) die Empfangssignale mit den Kompensationssignalen korreliert werden und mittels mindestens eines Vergleichers (V1, V4) die Empfangssignale mit den Ausgangssignalen mindestens eines adaptiven Filters (F1, F4) verglichen werden, und dass abhängig von den Ausgangsignalen des mindestens einen Vergleichers (V1, V4) spezifische Kompensationssignale mittels eines Prozessors (P1) ausgewählt und den mindestens zwei adaptiven Filtern (F1, F2, F3, F4) mittels der Schaltvorrichtung (S1, S2) zugeführt werden.
